# EUROPÄISCHE PATENTSCHRIFT

(11) **EP 3 701 785 B1**
(45) Veröffentlichungstag und Bekanntmachung des Hinweises auf die Patenterteilung: **19.01.2022**
(21) Anmeldenummer: 20158232.7
(22) Anmeldetag: 19.02.2020
(51) Int. Cl.: A01D 61/00

(54) **ERNTEVORRICHTUNG**
HARVESTING DEVICE
DISPOSITIF DE RÉCOLTE

(30) Priorität: 28.02.2019 DE 102019105168
(43) Veröffentlichungstag der Anmeldung: 02.09.2020
(73) Patentinhaber: CLAAS Saulgau GmbH, 88348 Bad Saulgau (DE)
(72) Erfinder: Birkhofer, Stefan, 78333 Stockach (DE); Boll, Ulrich, 88348 Bad Saulgau (DE)

(56) Entgegenhaltungen:
- EP-A1- 1 229 779
- EP-B1- 1 229 779
- WO-A1-2012/030763
- US-A- 3 060 665
- US-A- 3 241 301
- US-A- 3 509 699

## Beschreibung

Die Erfindung betrifft eine Erntevorrichtung nach dem Oberbegriff des Anspruchs 1.

Der grundsätzliche Aufbau einer Erntevorrichtung, die der Ankopplung an ein Zugfahrzeug bzw. Trägerfahrzeug dient, ist dem hier angesprochenen Fachmann geläufig. So verfügt eine Erntevorrichtung über Schneidorgane zum Trennen von Erntegut und/oder über Aufnahmeorgane zum Aufnehmen von Erntegut. Dann, wenn es sich bei der Erntevorrichtung um ein Mähwerk handelt, sind die Schneidorgane als Mähorgane ausgeführt. Dann, wenn die Erntevorrichtung als Merger ausgebildet ist, verfügt dieselbe ausschließlich über Aufnahmeorgane, um bereits geschnittenes Erntegut aufzunehmen.

Ferner verfügt eine Erntevorrichtung über mindestens eine Querfördereinrichtung, um das getrennte und/oder aufgenommene Erntegut in einer quer zur Ernterichtung der Erntevorrichtung verlaufenden Querförderrichtung zu fördern. Dabei ist es bereits bekannt, dass die mindestens eine Querfördereinrichtung als Schneckenförderer ausgebildet ist. Ein solcher Schneckenförderer verfügt über eine Trommel, die auch als Schneckenrohr bezeichnet wird. Die Trommel bzw. das Schneckenrohr trägt wendelartige Förderelemente, die in Radialrichtung der Trommel bzw. des Schneckenrohrs gegenüber der Trommel bzw. dem Schneckenrohr vorstehen und wendelartig um dasselbe herum verlaufen.

Bei aus der Praxis bekannten Erntevorrichtungen mit derartigen als Schneckenförderer ausgebildeten Querförderrichtungen sind die Schneckenförderer zylindrisch ausgebildet, das heißt, dass eine Einhüllende der wendelartigen Förderelemente einen Zylinder aufspannt. Eine Längsmittelachse des Schneckenförderers erstreckt sich dabei parallel zur Querförderrichtung, insbesondere parallel zu den Schneidorganen oder Aufnahmeorganen, die in Querförderrichtung gesehen in einer Reihe nebeneinander positioniert sind.

Bei aus der Praxis bekannten Erntevorrichtungen besteht die Gefahr eines sogenannten Stopfers im Bereich der Querfördereinrichtung, wobei die Gefahr in Querförderrichtung der Querfördereinrichtung zunimmt. Stopfer werden auch als Erntegutstopfer oder Erntegutstockungen bezeichnet. Es besteht Bedarf an einer Erntevorrichtung, bei welcher die Gefahr derartiger Stopfer reduziert ist.

Aus WO 2012/030763 A1 ist ein Schneidwerk für eine Getreideerntemaschine mit einem ersten und einem zweiten Seitenteil bekannt, wobei an jedem Seitenteil eine Querförderschnecke mit konischer Form angeordnet ist.

EP 1 229 779 A1 offenbart eine konische Querförderschnecke für einen Mäh- oder Maiserntevorsatz mit einem Grundkörper mit Schneckengängen, wobei den Schneckengängen in Fahrtrichtung Arbeitsorgane zum Mähen und/oder Transportieren des Erntegutes vorgeordnet sind.

Hiervon ausgehend liegt der vorliegenden Erfindung die Aufgabe zugrunde, eine neuartige Erntevorrichtung zu schaffen. Diese Aufgabe wird durch eine Erntevorrichtung nach Anspruch 1 gelöst. Erfindungsgemäß ist der jeweilige Schneckenförderer derart konusartig oder kegelartig ausgebildet, dass eine Einhüllende der wendelartigen Förderelemente einen sich in Querförderrichtung erweiternden Konus oder Kegel aufspannt. Dann, wenn wie vorgeschlagen, der jeweilige Schneckenförderer konusartig oder kegelartig ausgebildet ist, wenn also die Einhüllende der wendelartigen Förderelemente einen Konus oder Kegel aufspannt, ist in Gutflussrichtung bzw. in Querförderrichtung des Ernteguts gesehen die Gefahr von Stopfern beim Ernteguttransport reduziert. Es können höhere Mengen an Erntegut mit geringerer Gefahr von Stopfern transportiert werden.

Nach einer vorteilhaften Weiterbildung beträgt ein Konuswinkel oder Kegelwinkel der Einhüllenden zwischen 1° und 5°, bevorzugt zwischen 1° und 4°, besonders bevorzugt zwischen 2° und 3°. Ein derartiger Konuswinkel oder Kegelwinkel der Einhüllenden der wendelartigen Förderelemente des jeweiligen Schneckenförderers ist besonders bevorzugt und vorteilhaft, um mehr Erntegut ohne die Gefahr von Stopfern zu transportieren.

Nach einer vorteilhaften Weiterbildung verläuft eine Längsmittelachse der Trommel, die mit einer Längsmittelache der Einhüllenden zusammenfällt, in Querförderrichtung gesehen vertikal nach schräg oben und/oder horizontal nach schräg hinten. Dies ist besonders vorteilhaft, um mehr Erntegut ohne die Gefahr von Stopfern zu transportieren. Durch die vertikal nach schräg oben verlaufende Längsmittelachse des Schneckenförderers befindet sich die Abgabeöffnung etwas höher, so dass das Erntegut nach oben gefördert und bei der Abgabe auf einen von einem Frontmähwerk bereits ausgelegten Schwad abgelegt wird. Dadurch wird ein vorteilhaft gleichmäßiger Schwad gebildet. Bei horizontal verlaufenden Schneckenförderern nach dem Stand der Technik wird das Erntegut seitlich in einen bereits liegenden Schwad hineingeschoben, so dass sich das hinzukommende Erntegut aufstaut und vertikal aufrichtet. Dadurch ergibt sich ein nachteilhaft ungleichmäßiger Schwad.

Vorzugsweise ist die Trommel, welche die wendelartige Förderelemente trägt, zylindrisch ausgebildet. Eine zylindrisch konturierte Trommel bzw. ein zylindrisch konturiertes Schneckenrohr ist bevorzugt, um mehr Erntegut ohne die Gefahr von Stopfern zu transportieren.

Vorzugsweise nimmt in Querförderrichtung gesehen eine Steigung der wendelartigen Förderelemente zu. Dies ist vorteilhaft, um mehr Erntegut ohne die Gefahr von Stopfern zu transportieren.

Der jeweilige Schneckenförderer ist in einem wannenartigen Gutflusskanal angeordnet, der angepasst an den Schneckenförderer in Querförderrichtung gesehen vertikal nach schräg oben und/oder horizontal nach schräg hinten verläuft. Ein derartiger Gutflusskanal ist ebenfalls bevorzugt, um mehr Erntegut ohne die Gefahr von Stopfern zu transportieren.

Erfindungsgemäß divergiert die - von den Schneidorganen abgewandte - Rückwand des Gutflusskanals in Querförderrichtung gesehen gegenüber der Einhüllenden der wendelartigen Förderelemente des Schneckenförderers. D. h. der Abstand der Rückwand des Gutflusskanals zu den Schneckenwendeln nimmt in Querförderrichtung zu, so dass der Gutflusskanal mit zunehmendem Förderweg mehr Kapazität zur Aufnahme von Erntegut aufweist. Besonders bevorzugt beträgt der Öffnungswinkel zwischen der Einhüllenden der Schneckenwendeln und der Rückwand des Gutflusskanals etwa 1° (Winkelgrad).

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine Draufsicht auf eine Anordnung aus einem Trägerfahrzeug und an das Trägerfahrzeug angekoppelten Erntevorrichtungen;
- Fig. 2: eine Vorderansicht einer erfindungsgemäßen Erntevorrichtung;
- Fig. 3: eine Draufsicht der Erntevorrichtung der Fig. 2;
- Fig. 4: eine perspektivische Ansicht der Erntevorrichtung der Fig. 2.

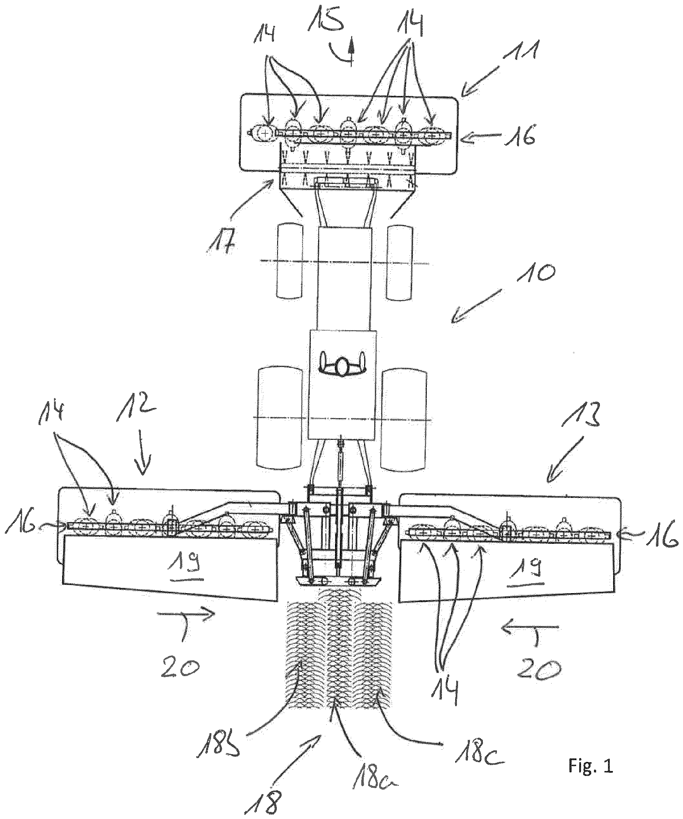

Fig. 1 zeigt eine Draufsicht auf eine Anordnung aus einem Trägerfahrzeug 10 sowie an das Trägerfahrzeug 10 gekoppelten Erntevorrichtungen 11, 12 und 13. Bei den Erntevorrichtungen 11, 12 und 13 handelt es sich im Ausführungsbeispiel der Fig. 1 jeweils um Mähwerke, nämlich bei der Erntevorrichtung 11 um ein Frontmähwerk, welches vorne an das Trägerfahrzeug 10 gekoppelt ist, und bei den Erntevorrichtungen 12, 13 um Heckmähwerke, die hinten an das Trägerfahrzeug 10 angekoppelt sind. Jede der in Fig. 1 gezeigten und als Mähwerke ausgebildeten Erntevorrichtungen 11, 12 und 13 verfügt über als Mähorgane ausgebildete Schneidorgane 14 zum Trennen von Erntegut, wobei die Schneidorgane 14 quer zu einer Ernterichtung 15 gesehen, unter Ausbildung jeweils eines Schneidbalkens 16, der auch als Mähbalken bezeichnet wird, nebeneinander positioniert sind.

Im Bereich der Erntevorrichtung 11 bzw. des Frontmähwerks ist weiterhin ein Aufbereiter 17 angeordnet, welcher der Aufbereitung, insbesondere Zerkleinerung, des geschnittenen bzw. abgetrennten Ernteguts dient. Ein derartiger Aufbereiter kann auch im Bereich der als Heckmähwerke ausgebildeten Erntevorrichtung 12 und 13 vorhanden sein.

Fig. 1 zeigt weiterhin einen Schwad 18 von getrenntem Erntegut, der auf einem zu bearbeitenden Untergrund abgelegt wird, wobei dieser Schwad 18 aus Teilschwaden 18a, 18b und 18c gebildet wird. So erzeugt die Erntevorrichtung 11 den Teilschwad 18a, die Erntevorrichtung 12 den Teilschwad 18b und die Erntevorrichtung 13 den Teilschwad 18c, die zu dem Schwad 18 vereinigt werden.

Insbesondere im Bereich der Erntevorrichtungen 12, 13, die in Fig. 1 als Heckmähwerke ausgeführt sind, sind Querfördereinrichtungen 19 vorgesehen, die dem Transport des geschnittenen Ernteguts quer zur Ernterichtung 15 in einer Querförderrichtung 20 dienen, wobei die jeweilige Querförderrichtung jeweils von außen nach innen gerichtet ist.

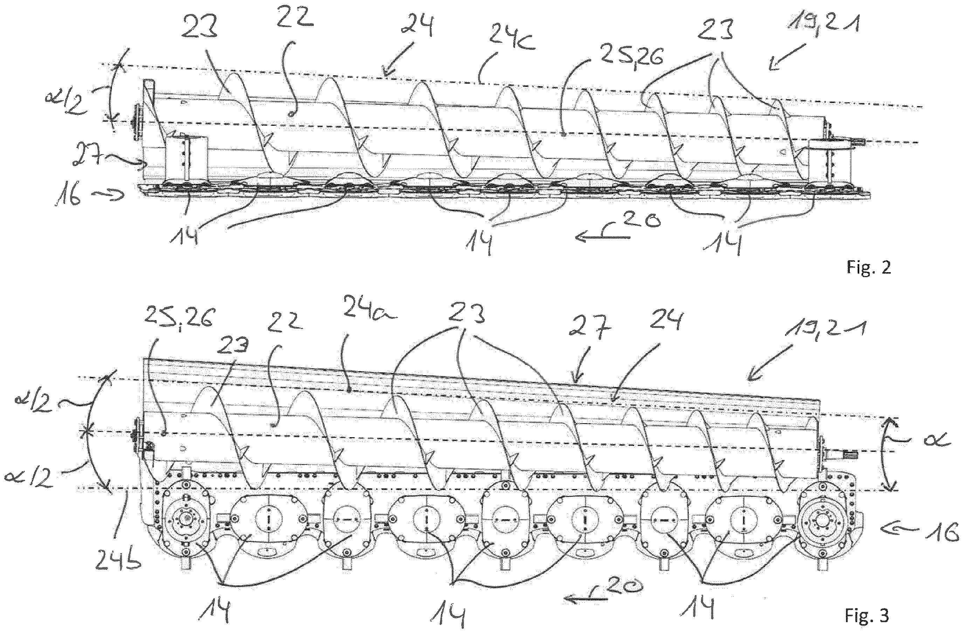

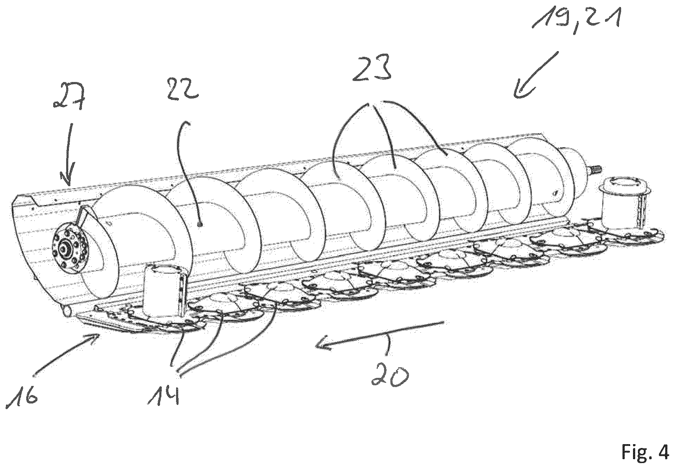

Die Querfördereinrichtungen 19 von Erntevorrichtungen sind dabei bei einer erfindungsgemäßen Erntevorrichtung als Schneckenförderer 21 ausgebildet, wobei Fig. 2 bis 4 Details solcher als Schneckenförderer 21 ausgebildeter Querfördereinrichtungen 19 zeigen.

Eine als Schneckenförderer 21 ausgebildete Querfördereinrichtung 19 verfügt über eine Trommel 22, die auch als Schneckenrohr bezeichnet wird sowie über gegenüber der Trommel 22 in Radialrichtung der Trommel 22 vorstehende, wendelartige Förderelemente 23.

Erfindungsgemäß wird vorgeschlagen, dass der jeweilige Schneckenförderer 21 derart konusartig oder kegelartig ausgebildet ist, dass eine Einhüllende 24 der wendelartigen Förderelemente 23 einen Konus oder einen Kegel aufspannt, der durch einen Konuswinkel bzw. Kegelwinkel α definiert ist. Dieser Konuswinkel bzw. Kegelwinkel α kann auch als Öffnungswinkel des Konus bzw. Kegels bezeichnet werden. Der Konus oder Kegel erweitert bzw. öffnet sich in Querförderrichtung gesehen.

In Fig. 2 und 3 sind Geraden 24a, 24b bzw. 24c gezeigt, die auf der Einhüllenden 24 der wendelartigen Förderelemente 23 liegen und mit einer Längsmittelachse 25 der Einhüllenden jeweils den halben Konuswinkel a/2 bzw. halben Kegelwinkel a/2 einschließen.

Durch einen derartig konusartig oder kegelartig konturierten Schneckenförderer 21 kann in Transportrichtung 20 gesehen mehr Erntegut ohne die Gefahr von Stopfern transportiert werden.

Der Konuswinkel α der Einhüllenden 24 beträgt vorzugsweise zwischen 1° und 5°, bevorzugt zwischen 1° und 4°, besonders bevorzugt zwischen 2° und 3°, insbesondere 2,5°. Ein derartiger Öffnungswinkel α des Konus, der sich in Querförderrichtung 20 erweitert, ist besonders bevorzugt, um mehr Erntegut ohne die Gefahr von Stopfern zu transportieren.

In dem in Fig. 2 und 3 gezeigten Ausführungsbeispiel ist die Längsmittelachse 25 der Einhüllenden 24, die mit einer Längsmittelachse 26 der Trommel 22 des Schneckenförderers 21 zusammenfällt, in Querförderrichtung 20 gesehen schräg gestellt, und zwar gemäß Fig. 2 nach vertikal schräg oben und gemäß Fig. 3 horizontal nach schräg hinten, und zwar in Fig. 2 und 3 um den halben Konuswinkel bzw. den halben Kegelwinkel α/2. In diesem Fall verläuft die Einhüllende vorne und unten parallel zu den Schneidorganen 14.

Es ist auch möglich, dass die Längsmittelachsen 25, 26 um mehr als den halben Konuswinkel bzw. mehr als den halben Kegelwinkel nach oben sowie nach hinten schräg gestellt sind, und zwar wiederum, in Querförderrichtung. Hierdurch kann ein sogenannter Abwurfwinkel des Querförderers 19 optimiert werden, um die Gefahr von Stopfern beim Transport des Ernteguts weiter zu reduzieren. Weiterhin wird durch eine höhere Abgabehöhe erreicht, dass das quergeförderte Erntegut von oben auf einen, bereits von einem Frontmähwerk geformten, Schwad geworfen bzw. abgelegt wird. Dadurch ergibt sich ein vorteilhaft gleichmäßiger Schwad.

Die Trommel 22 des als Schneckenförderer 21 ausgebildeten Querförderers 19 ist vorzugsweise zylindrisch konturiert. Dieselbe kann jedoch auch kegelartig oder konusartig konturiert sein. Die zylindrische Konturierung ist bevorzugt, um in Querförderrichtung 20 gesehen im Bereich des Schneckenförderers 21 mehr Volumen für das zu transportierende Erntegut bereitzustellen, und so mehr Erntegut ohne die Gefahr von Stopfern transportieren zu können.

Wie bereits ausgeführt, ist die Einhüllende 24 der wendelartigen Förderelemente 23 konusartig oder kegelartig konturiert, und zwar derart, dass der Konus bzw. Kegel und damit die Einhüllende 24 in Querförderrichtung 20 gesehen divergiert und sich damit aufweitet, wobei dies bei einer vorzugsweise zylindrisch konturierten Trommel 22 dadurch erreicht wird, dass in Querförderrichtung 20 gesehen, die radiale Erstreckung wendelartigen Förderelemente 23 zunimmt.

Vorzugsweise ist vorgesehen, dass in Querförderrichtung 20 gesehen die Steigung der wendelartigen Förderelemente 23 zunimmt, um so das Erntegut bei dem Transport desselben in Querförderrichtung 20 stärker zu beschleunigen. Im Unterschied hierzu ist es jedoch auch möglich, dass die Steigung der wendelartigen Förderelemente 23 in Querförderrichtung 20 gesehen konstant ist.

Fig. 2, 3 und 4 zeigen weiterhin einen wannenartigen Gutflusskanal 27, in welchem der Schneckenförderer 21 angeordnet ist. Dieser Gutflusskanal 27 ist vorzugsweise angepasst an den Schneckenförderer 21 in Querförderrichtung gesehen vertikal nach schräg oben und/oder horizontal nach schräg hinten geneigt.

Weiterhin ist vorzugsweise vorgesehen, dass der jeweilige Gutflusskanal 27 sich in Querförderrichtung gesehen konusartig oder kegelartig erweitert, um so wiederum mehr Volumen für das zu transportierende Erntegut bereitzustellen und so mehr Erntegut mit einer geringeren Gefahr von Stopfern zu transportieren. Erfindungsgemäß nimmt der Abstand zwischen der Rückwand des Gutflusskanals und der Schneckenwendel bzw. der diese Einhüllenden in Querförderrichtung zu. Der Öffnungswinkel zwischen der Einhüllenden der Schneckenwendeln und der Rückwand des Gutflusskanals beträgt besonders bevorzugt etwa 1° (Winkelgrad).

Bei der erfindungsgemäßen Erntevorrichtung kann es sich um ein Schneidwerk oder Mähwerk handeln, welches entweder als Vorsatzgerät vorne an ein Trägerfahrzeug oder als Anhängegerät hinten an ein Trägerfahrzeug gekoppelt wird. Ferner kann es sich bei der erfindungsgemäßen Erntevorrichtung um einen sogenannten Merger handeln, der lediglich dem Aufnehmen von bereits geschnittenem bzw. getrenntem Erntegut und dem Querfördern desselben dient, um Erntegut zu einem Schwad zu vereinigen. Dann, wenn es sich bei der erfindungsgemäßen Erntevorrichtung um ein Schneidwerk oder Mähwerk zum Frontanbau an ein Trägerfahrzeug handelt, kann dasselbe auch als Direktschneidwerk ausgeführt sein, wobei als Direktschneidwerk ein Vorsatzgerät für einen Feldhäcksler bezeichnet wird, welches als Schneidwerk oder Mähwerk ausgebildet ist.

Bei einem derartigen Direktschneidwerk kann über die Breite desselben eine durchgehende Trommel 22 vorgesehen sein, welche beidseitig mit in entgegengesetzter Richtung zur Mitte hin fördernden, wendelartigen Förderelementen 23 besetzt ist. Es kann auch eine geteilte Trommel 20 genutzt werden, die dann über mindestens ein Gelenk verbunden ist, wobei dann jede der Trommeln 20, wie oben beschrieben ausgeführt, mit wendelartigen Förderelementen 23 besetzt ist, um einen entsprechenden konusartig oder kegelartig konturierten Schneckenförderer auszubilden.

Mit der Erfindung kann Erntegut mithilfe eines Schneckenförderers 21 optimal transportiert werden, und zwar ohne die Gefahr eines Stopfers. In Gutflussrichtung bzw. Transportrichtung des Ernteguts gesehen nimmt das Volumen für das zu transportierende Erntegut zu, sodass mehr Erntegutmasse sicher ohne die Gefahr eines Stopfers transportiert werden kann. Durch den steigenden Außendurchmesser der wendelartigen Förderelementen 23 nimmt die Umfangsgeschwindigkeit der Förderelemente 23 in Transportrichtung gesehen zu, und somit auch die Fördergeschwindigkeit in tangentialer Richtung. Hierdurch wird das Erntegut auf der in Querförderrichtung gesehen stromabwärtigen Seite, wo mehr Erntegut gefördert werden muss, schneller weggefördert. Da insgesamt mehr Förderraum für Erntegut zur Verfügung steht, kann der Schneckenförderer 21 mit einer relativ geringen Drehzahl betrieben werden. Hierdurch steigt die Effizienz im Betrieb der Erntevorrichtung. Wie bereits ausgeführt, kann die Steigung der Förderelemente 23 in Querförderrichtung größer werden, wodurch ein noch homogenerer Transport des Ernteguts unter Vermeidung von Stopfern bzw. Materialstockungen möglich ist. Durch die Vermeidung von Stopfern bzw. Materialstockungen kann ein homogenerer Schwad erzeugt werden.

Die Trommel 22 bzw. das Schneckenrohr des Schneckenförderers sind als Grundkörper zu verstehen, welcher die Förderelemente 23 trägt und ist nicht auf einen Hohlkörper beschränkt, sondern kann auch massiv bzw. als Vollmaterial ausgeführt sein.

### Bezugszeichenliste

- 10: Trägerfahrzeug
- 11: Erntevorrichtung
- 12: Erntevorrichtung
- 13: Erntevorrichtung
- 14: Schneidorgan
- 15: Ernterichtung
- 16: Schneidbalken
- 17: Aufbereiter
- 18: Schwad
- 18b: Teilschwad
- 18b: Teilschwad
- 18c: Teilschwad
- 19: Querfördereinrichtung
- 20: Querförderrichtung
- 21: Schneckenförderer
- 22: Trommel
- 23: Förderelement
- 24: Einhüllende
- 24a: Gerade
- 24b: Gerade
- 24c: Gerade
- 25: Längsmittelachse
- 26: Längsmittelachse
- 27: Gutflusskanal

## Patentansprüche

1. Erntevorrichtung,
mit Schneidorganen (14) zum Trennen von Erntegut und/oder mit Aufnahmeorganen zum Aufnehmen von Erntegut,
mit mindestens einer Querfördereinrichtung (19) zum Fördern des getrennten und/oder aufgenommenen Ernteguts in einer quer zur Ernterichtung (15) verlaufenden Querförderrichtung (20),
wobei die mindestens eine Querfördereinrichtung (19) als Schneckenförderer (21) ausgebildet ist, der eine Trommel (22) und gegenüber der Trommel (22) in Radialrichtung derselben vorstehende, wendelartige Förderelemente (23) aufweist, wobei
der jeweilige Schneckenförderer (21) derart konusartig oder kegelartig ausgebildet ist, dass eine Einhüllende (24) der wendelartigen Förderelemente (23) einen Konus oder Kegel aufspannt, der sich in Querförderrichtung (20) gesehen konusartig oder kegelartig erweitert, wobei der Schneckenförderer (21) in einem wannenartigen Gutflusskanal (27) angeordnet ist, der angepasst an den Schneckenförderer (21) in Querförderrichtung (20) nach schräg oben und/oder nach schräg hinten verläuft,
**dadurch gekennzeichnet, dass**
eine Rückwand des Gutflusskanals (27) in Querförderrichtung (20) gesehen gegenüber der Einhüllenden (24) der wendelartigen Förderelemente (23) des Schneckenförderers (21) divergiert, wodurch der Abstand der Rückwand des Gutflusskanals (27) zu den wendelartigen Förderelementen (23) in Querförderrichtung (20) zunimmt.

2. Erntevorrichtung nach Anspruch 1, **dadurch gekennzeichnet, dass** ein Konuswinkel oder Kegelwinkel (a) der Einhüllenden (24) der wendelartigen Förderelemente (23) zwischen 1° und 5°, bevorzugt zwischen 1° und 4°, besonders bevorzugt zwischen 2° und 3°, beträgt.

3. Erntevorrichtung nach Anspruch 1 oder 2, **dadurch gekennzeichnet, dass** eine Längsmittelachse (26) der Trommel (22) in Querförderrichtung (20) gesehen vertikal nach schräg oben verläuft.

4. Erntevorrichtung nach Anspruch 3, **dadurch gekennzeichnet, dass** die Längsmittelachse (26) der Trommel (22) um den halben Konuswinkel oder halben Kegelwinkel nach oben schräggestellt ist.

5. Erntevorrichtung nach Anspruch 3, **dadurch gekennzeichnet, dass** die Längsmittelachse (26) der Trommel (22) um mehr als den halben Konuswinkel oder halben Kegelwinkel nach oben schräggestellt ist.

6. Erntevorrichtung nach einem der Ansprüche 1 bis 5, **dadurch gekennzeichnet, dass** eine Längsmittelachse (26) der Trommel (22) in Querförderrichtung (20) gesehen horizontal nach schräg hinten verläuft.

7. Erntevorrichtung nach Anspruch 6, **dadurch gekennzeichnet, dass** die Längsmittelachse (26) der Trommel (22) um den halben Konuswinkel oder halben Kegelwinkel nach hinten schräggestellt ist.

8. Erntevorrichtung nach Anspruch 6, **dadurch gekennzeichnet, dass** die Längsmittelachse (26) der Trommel (22) um mehr als den halben Konuswinkel oder halben Kegelwinkel nach hinten schräggestellt ist.

9. Erntevorrichtung nach einem der Ansprüche 1 bis 8, **dadurch gekennzeichnet, dass** die Trommel (22), welche die wendelartigen Förderelemente (23) trägt, zylindrisch ausgebildet ist.

10. Erntevorrichtung nach einem der Ansprüche 1 bis 8, **dadurch gekennzeichnet, dass** die Trommel (22), welche die wendelartigen Förderelemente (23) trägt, konusartig oder kegelartig ausgebildet ist.

11. Erntevorrichtung nach einem der Ansprüche 1 bis 10, **dadurch gekennzeichnet, dass** in Querförderrichtung (20) gesehen eine Steigung der wendelartigen Förderelemente (23) konstant ist.

12. Erntevorrichtung nach einem der Ansprüche 1 bis 10, **dadurch gekennzeichnet, dass** in Querförderrichtung (20) gesehen eine Steigung der wendelartigen Förderelemente (23) zunimmt.

## Claims

1. Harvesting machine
having cutting members (14) for separating harvested material and/or having receiving members for receiving harvested material,
having at least one transverse conveying device (19) for conveying the separated and/or received harvested material in a transverse conveying direction (20) extending transversely to the harvesting direction (15),
wherein the at least one transverse conveying device (19) is configured as a screw conveyor (21) which has a drum (22) and helical conveying elements (23) protruding from the drum (22) in the radial direction thereof, wherein
the respective screw conveyor (21) is configured in a conical manner such that an envelope surface (24) of the helical conveying elements (23) defines a cone which widens in a conical manner as seen in the transverse conveying direction (20), wherein the screw conveyor (21) is arranged in a trough-like material flow channel (27) which runs obliquely upward and/or obliquely towards the rear in the transverse conveying direction (20) in a manner adapted to the screw conveyor (21),
**characterized in that**
a rear wall of the material flow channel (27) diverges, as seen in the transverse conveying direction (20), from the envelope surface (24) of the helical conveying elements (23) of the screw conveyor (21), with the result that the distance of the rear wall of the material flow channel (27) from the helical conveying elements (23) increases in the transverse conveying direction (20).

2. Harvesting machine according to Claim 1, **characterized in that** a cone angle (α) of the envelope surface (24) of the helical conveying elements (23) is between 1° and 5°, preferably between 1° and 4°, particularly preferably between 2° and 3°.

3. Harvesting machine according to Claim 1 or 2, **characterized in that** a longitudinal central axis (26) of the drum (22) extends vertically obliquely upward as seen in the transverse conveying direction (20) .

4. Harvesting machine according to Claim 3, **characterized in that** the longitudinal central axis (26) of the drum (22) slopes upward by half the cone angle.

5. Harvesting machine according to Claim 3, **characterized in that** the longitudinal central axis (26) of the drum (22) slopes upward by more than half the cone angle.

6. Harvesting machine according to one of Claims 1 to 5, **characterized in that** a longitudinal central axis (26) of the drum (22) extends horizontally obliquely towards the rear as seen in the transverse conveying direction (20).

7. Harvesting machine according to Claim 6, **characterized in that** the longitudinal central axis (26) of the drum (22) slopes towards the rear by half the cone angle.

8. Harvesting machine according to Claim 6, **characterized in that** the longitudinal central axis (26) of the drum (22) slopes towards the rear by more than half the cone angle.

9. Harvesting machine according to one of Claims 1 to 8, **characterized in that** the drum (22), which carries the helical conveying elements (23), is configured in a cylindrical manner.

10. Harvesting machine according to one of Claims 1 to 8, **characterized in that** the drum (22), which carries the helical conveying elements (23), is configured in a conical manner.

11. Harvesting machine according to one of Claims 1 to 10, **characterized in that** a pitch of the helical conveying elements (23) is constant as seen in the transverse conveying direction (20).

12. Harvesting machine according to one of Claims 1 to 10, **characterized in that** a pitch of the helical conveying elements (23) increases as seen in the transverse conveying direction (20).

## Revendications

1. Dispositif de récolte,
muni d'organes de coupe (14) pour la séparation du produit récolté et/ou muni d'organes de réception pour la réception du produit récolté,
muni d'au moins un appareil de transport transversal (19) pour le transport du produit récolté séparé et/ou reçu dans une direction de transport transversal (20) s'étendant transversalement à la direction de récolte (15),
l'au moins un appareil de transport transversal (19) étant configuré sous la forme d'un transporteur à vis (21), qui comprend un tambour (22) et des éléments de transport hélicoïdaux (23) faisant saillie par rapport au tambour (22) dans la direction radiale de celui-ci,
le transporteur à vis respectif (21) étant configuré sous forme conique ou évasée de telle sorte qu'une enveloppe (24) des éléments de transport hélicoïdaux (23) définit un cône ou un évasement qui s'élargit de manière conique ou évasée, tel que vu dans la direction de transport transversal (20), le transporteur à vis (21) étant agencé dans un canal d'écoulement de produit (27) en forme d'auge qui s'étend obliquement vers le haut et/ou obliquement vers l'arrière dans la direction de transport transversal (20) de manière adaptée au transporteur à vis (21),
**caractérisé en ce que**
une paroi arrière du canal d'écoulement de produit (27) diverge, tel que vu dans la direction de transport transversal (20), par rapport à l'enveloppe (24) des éléments de transport hélicoïdaux (23) du transporteur à vis (21), de telle sorte que la distance de la paroi arrière du canal d'écoulement de produit (27) par rapport aux éléments de transport hélicoïdaux (23) augmente dans la direction de transport transversal (20).

2. Dispositif de récolte selon la revendication 1, **caractérisé en ce qu'**un angle de cône ou angle d'évasement (α) des enveloppes (24) des éléments de transport hélicoïdaux (23) est compris entre 1° et 5°, de préférence entre 1° et 4°, de manière particulièrement préférée entre 2° et 3°.

3. Dispositif de récolte selon la revendication 1 ou 2, **caractérisé en ce qu'**un axe central longitudinal (26) du tambour (22) s'étend verticalement obliquement vers le haut, tel que vu dans la direction de transport transversal (20).

4. Dispositif de récolte selon la revendication 3, **caractérisé en ce que** l'axe central longitudinal (26) du tambour (22) est incliné vers le haut de la moitié de l'angle de cône ou de la moitié de l'angle d'évasement.

5. Dispositif de récolte selon la revendication 3, **caractérisé en ce que** l'axe central longitudinal (26) du tambour (22) est incliné vers le haut de plus de la moitié de l'angle de cône ou de la moitié de l'angle d'évasement.

6. Dispositif de récolte selon l'une quelconque des revendications 1 à 5, **caractérisé en ce qu'**un axe central longitudinal (26) du tambour (22) s'étend horizontalement obliquement vers l'arrière, tel que vu dans la direction de transport transversal (20).

7. Dispositif de récolte selon la revendication 6, **caractérisé en ce que** l'axe central longitudinal (26) du tambour (22) est incliné vers l'arrière de la moitié de l'angle de cône ou de la moitié de l'angle d'évasement.

8. Dispositif de récolte selon la revendication 6, **caractérisé en ce que** l'axe central longitudinal (26) du tambour (22) est incliné vers l'arrière de plus de la moitié de l'angle de cône ou de la moitié de l'angle d'évasement.

9. Dispositif de récolte selon l'une quelconque des revendications 1 à 8, **caractérisé en ce que** le tambour (22), qui porte les éléments de transport hélicoïdaux (23), est configuré sous forme cylindrique.

10. Dispositif de récolte selon l'une quelconque des revendications 1 à 8, **caractérisé en ce que** le tambour (22), qui porte les éléments de transport hélicoïdaux (23), est configuré sous forme conique ou évasée.

11. Dispositif de récolte selon l'une quelconque des revendications 1 à 10, **caractérisé en ce que,** tel que vue dans la direction de transport transversal (20), une pente des éléments de transport hélicoïdaux (23) est constante.

12. Dispositif de récolte selon l'une quelconque des revendications 1 à 10, **caractérisé en ce que,** tel que vue dans la direction de transport transversal (20), une pente des éléments de transport hélicoïdaux (23) augmente.
